# EUROPÄISCHE PATENTSCHRIFT

(11) **EP 2 054 700 B1**
(45) Veröffentlichungstag und Bekanntmachung des Hinweises auf die Patenterteilung: **10.08.2011**
(21) Anmeldenummer: 07765703.9
(22) Anmeldetag: 28.06.2007
(51) Int. Cl.: G01C 21/36, G06F 3/048

(54) **VERFAHREN ZUR EINGABE EINES FAHRZIELS**
METHOD FOR INPUTTING A TRAVEL DESTINATION
PROCEDE POUR ENTRER UNE DESTINATION

(30) Priorität: 17.08.2006 DE 102006038550
(43) Veröffentlichungstag der Anmeldung: 06.05.2009
(73) Patentinhaber: Robert Bosch GmbH, 70442 Stuttgart (DE)
(72) Erfinder: LISTLE, Holger, 31141 Hildesheim (DE); KREWER, Joerg, 30982 Pattensen (DE); LUEER, Stefan, 31139 Hildesheim (DE); OSMERS, Ralf, 31139 Hildesheim (DE); WALKLING, Uwe, 31035 Barfelde (DE); BRANDES, Henry, 31556 Woelpinghausen (DE); FIEDLER, Marco, 31199 Diekholzen (DE); KLEIN, Thomas, 31061 Alfeld (DE)
(86) Internationale Anmeldenummer: PCT/EP2007/056481
(87) Internationale Veröffentlichungsnummer: WO 2008/019908

(56) Entgegenhaltungen:
- EP-A2- 0 704 675
- US-B1- 6 484 094

## Beschreibung

### Stand der Technik

Die Erfindung geht aus von einem Verfahren zur Eingabe eines Fahrziels nach der Gattung der nebengeordneten Ansprüche. Aus der US 6,484,094 B1 ist bereits eine Vorrichtung und ein Verfahren zur Fahrzieleingabe für ein Navigationssystem bekannt, bei dem ein Benutzer besondere Fahrziele auswählen kann. Um eine schnellere Eingabe zu ermöglichen, sind Kategorien von besonderen Fahrzielen und Unterkategorien vorgesehen. Der Benutzer kann hierbei innerhalb einer Liste eine entsprechende Kategorie auswählen und erhält nach der Auswahl einer Kategorie ein oder mehrere entsprechende Fahrziele zur Auswahl angezeigt.

Aus der gattungsbildenden EP 0 704 675 A2 ist eine Menübedienung für die Eingabe von Fahrzielen in eine Navigationsvorrichtung bekannt, bei der die Eingabe von besonderen Fahrzielen bestimmter Kategorien über eine hierarchische Menüführung erfolgt.

### Offenbarung der Erfindung

### Vorteile der Erfindung

Das erfindungsgemäße Verfahren zur Eingabe eines Fahrziels mit den Merkmalen des Anspruchs 1 hat demgegenüber den Vorteil, dass die Auswahl einer Kategorie beschleunigt werden kann, da eine Kategorieauswahl dynamisch an die tatsächlich vorhandenen Kategorien angepasst werden kann. Dadurch, dass eine übergeordnete Kategorie durch eine oder mehrere nachgeordnete Kategorien in einer Auswahl ersetzt wird, wird ein gegebenenfalls unnötiger Auswahlschritt, der zunächst die Auswahl einer übergeordneten Kategorie und anschließend die Auswahl einer nachgeordneten Kategorie beinhaltet, vermieden. Bevorzugt ist hierbei ein Schwellwert vorgesehen, so dass entweder nach Vorgabe durch den Hersteller oder gegebenenfalls auch nach einem Benutzerwunsch festgelegt werden kann, wann die Unterkategorien die übergeordnete Kategorie ersetzen oder wann tatsächlich die übergeordnete Kategorie zunächst für eine Auswahl angezeigt wird.

Besonders vorteilhaft ist ferner, das erfindungsgemäße Verfahren in einer rechnergesteuerten Navigationsvorrichtung durchzuführen, da somit insbesondere an einem Fahrzeug einem Fahrer eine schnelle Auswahl eines Fahrziels über eine vorgelagerte, erfindungsgemäße Kategorieauswahl bereitgestellt werden kann. Hierdurch wird insbesondere die Fahrzieleingabe im Fahrzeug beschleunigt.

Durch die in den abhängigen Ansprüchen aufgeführten Maßnahmen sind vorteilhafte Weiterbildungen und Verbesserungen des in dem Anspruch 1 angegebenen Verfahrens zur Eingabe eines Fahrziels möglich. Besonders vorteilhaft ist es, zunächst einen Ort oder ein Gebiet auszuwählen, so dass bei einer Auswahl eines Fahrziels nur diejenigen Kategorien berücksichtigt werden, zu denen auch wenigsten ein Fahrziel in dem ausgewählten Gebiet existiert. Eine Ersetzung von übergeordneten Kategorien durch nachgeordnete Kategorien kann bei einem eingeschränkten Gebiet aufgrund der geringeren Größe und der damit verbundenen geringeren Anzahl von Fahrzielen wahrscheinlich häufiger erfolgen. Insbesondere bei kleineren Gebieten und Orten kann sich hierdurch die Auswahl der angebotenen übergeordneten Kategorien stark reduzieren, so dass Kategorieauswahl und damit die Eingabe des Fahrziels beschleunigt wird.

Ferner ist es vorteilhaft, dass zusätzlich zu einer übergeordneten Kategorie eine Auswahl mit einer Gesamtliste aller zu der jeweiligen übergeordneten Kategorie untergeordneten Fahrziele zur Auswahl angeboten wird. Für den Fall, dass einem Nutzer die Zuordnung eines Fahrziels zu einer der Unterkategorien unklar ist, kann der Nutzer direkt aus der Gesamtliste das jeweilige Fahrziel auswählen, ohne zuvor eine nachgeordnete Kategorie bestimmen zu müssen. Dies ist insbesondere dann vorteilhaft, wenn ein Nutzer mit einem System noch nicht vertraut ist, wenn ein Nutzer die Bediensprache nicht gut versteht oder eine Zuordnung zu den Unterkategorien gegebenenfalls mehrdeutig sein könnte.

Ferner ist es vorteilhaft, dass eine entsprechende Ersetzung einer übergeordneten Kategorie durch eine oder mehrere nachgeordnete Kategorien zur Auswahl nicht nur in einer ersten Hierarchieebene erfolgt, sondern dass sich eine entsprechende Ersetzung auch über mehrere Hierarchieebenen hinweg erstrecken kann. Dabei ist es besonders vorteilhaft, wenn ein Ersetzen einer übergeordneten Kategorie nicht nur durch eine Kategorie der nächsten, nachgeordneten Hierarchieebene erfolgen kann, sondern dass auch ein Ersetzen durch eine Kategorie aus einer weiteren, tiefer nachgeordneten Kategoriegruppe möglich ist. Hierbei ist es besonders vorteilhaft, dass durch einen zweiten Schwellwert dabei die Gesamtanzahl der in der Anzeige nachgeordneten Kategorien, einschließlich der tieferen Kategorien, beschränkt wird. Hierdurch ist es z. B. möglich, die Anzeige der gesamten, dargestellten Kategorien zu beschränkten, beispielsweise auf eine Bildschirmseite einer Anzeige.

Um eine Anzeige von Kategorien an Benutzerwünsche anzupassen ist es vorteilhaft vorgesehen, den Schwellwert durch einen Benutzer veränderlich zu gestalten.

### Kurze Beschreibung der Zeichnungen

Ausführungsbeispiele der Erfindung sind in der Zeichnung dargestellt und in der nachfolgenden Beschreibung näher erläutert. Es zeigen
Figur 1 eine Navigationsvorrichtung,
Figur 2 ein erfindungsgemäßes Verfahren zur Eingabe eines Fahrziels.
Figur 3 ein Detail des erfindungsgemäßen Verfahrens zur Eingabe eines Fahrziels nach der Figur 2.

### Ausführungsformen der Erfindung

Das erfindungsgemäße Verfahren zur Eingabe eines Fahrziels kann für beliebige Navigationseinrichtungen verwendet werden, die eine Fahrtroute von einem Startpunkt zu einem Fahrziel berechnen. Insbesondere ist die Verwendung in einem Fahrzeug vorteilhaft, da bei einer Benutzung im Fahrzeug ein gewünschtes Fahrziel aus Sicht des Fahrers möglichst schnell eingegeben werden soll, da die Fahrzieleingabe nur bei einem stehenden Fahrzeug durchgeführt werden sollte. Daher wird die vorliegende Erfindung im Folgenden am Beispiel einer Navigationsvorrichtung in einem Kraftfahrzeug erläutert.

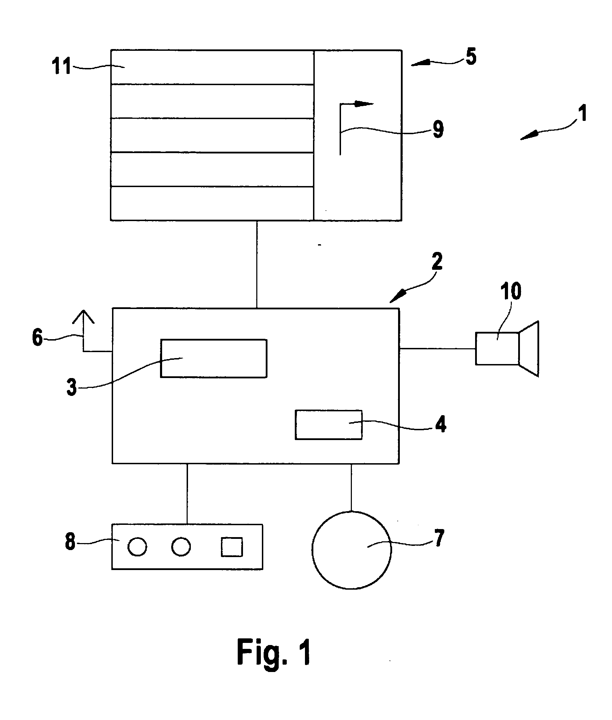

In der Figur 1 ist eine Navigationsvorrichtung 1 dargestellt, die in einem Fahrzeug herausnehmbar oder fest angeordnet ist. Die Navigationsvorrichtung 1 weist eine Zentraleinheit 2 auf, die über eine Recheneinheit 3 und einen vorzugsweise nicht flüchtigen Speicher 4 verfügt. An die Zentraleinheit 2 ist eine Anzeige 5 angeschlossen. Die Anzeige 5 ist beispielsweise als eine Flüssigkristallanzeige ausgeführt und in einer Mittelkonsole oder in einem Bereich einer Instrumententafel des Kraftfahrzeugs angeordnet. Die Zentraleinheit 2 ist ferner mit einer Antenneneinheit 6 zur Durchführung einer Fahrzeugortung verbunden. Die Antenneneinheit 6 dient beispielsweise einer Satellitenortung. Eine Position des Fahrzeugs wird dabei von der Recheneinheit 3 unter Ausnutzung der über die Antenneneinheit 6 bestimmten Position und unter Zugriff auf eine digitale Straßenkarte 7 durchgeführt, die in einem vorzugsweise ebenfalls nicht flüchtigen Speicherelement abgelegt ist. Über eine Bedieneinheit 8 kann ein Benutzer ein Fahrziel in die Navigationsvorrichtung 1 eingehen. Unter Berücksichtigung der über die Antenneneinheit 6 bestimmten aktuellen Position berechnet die Recheneinheit 3 unter Zugriff auf die digitale Karte 7 eine Fahrtroute zu dem angegebenen Fahrziel. Fahrhinweise können beispielsweise in Form eines Richtungspfeils 9 in der Anzeigeeinheit 5 ausgegeben werden. Ferner können Fahranweisungen alternativ oder ergänzend auch über eine akustische Ausgabeeinheit 10 ausgegeben werden. Ein Programm zur Durchführung der Fahrtroutenberechnung ist vorzugsweise in dem Speicher 4 abgelegt. Ferner ist in dem Speicher 4 auch ein Verfahren zur Fahrzieleingabe abgelegt. Hierzu werden in der Anzeigeeinheit 5 einem Benutzer Kategorien von Fahrzielen und Fahrziele dargestellt. Durch eine Auswahl der dargestellten Kategorien bzw. Fahrziele in Eingabefeldern 11 kann ein Benutzer zunächst eine Kategorieauswahl treffen, um nach der Kategorieauswahl eine durch die Kategorieauswahl eingeschränkte Auswahl von Fahrzielen angeboten zu erhalten. Aus diesem durch die Kategorieauswahl eingeschränkten Angebot von Fahrzielen kann nun ein Fahrziel ausgewählt werden. Die Steuerung erfolgt über die Bedieneinheit 8 oder über eine als Touchscreen-Bedieneinheit ausgebildete Anzeigeeinheit 5. Neben einer im Weiteren erläuterten Eingabe eines Fahrziels über eine zuvor durchgeführte Auswahl des Fahrziels nach Kategorien ist es auch möglich, das Fahrziel durch die Angabe einer Adresse oder durch die Positionierung in einer Karte einzugeben.

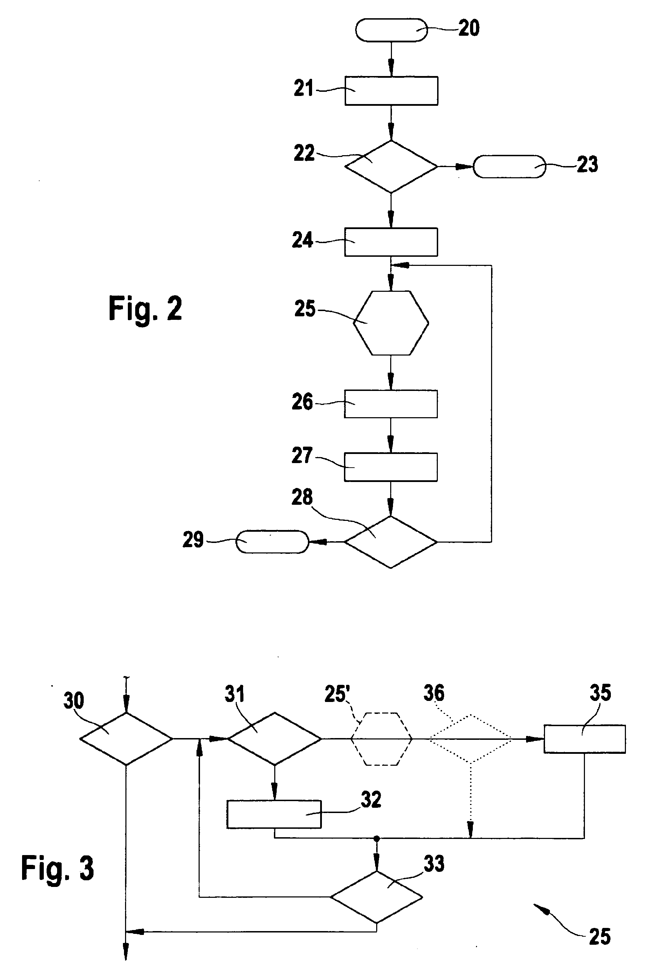

Im Folgenden wird anhand der Figur 2 die Eingabe eines Fahrziels erläutert, wobei das Fahrziel nach Kategorien ausgewählt wird. Hierbei wird zunächst eine übergeordnete Kategorie ausgewählt. Zur Auswahl werden dem Benutzer beispielsweise mehrere Kategorien in Auswahlfeldern in einer Anzeige angezeigt, wobei eine Kategorie durch eine Auswahl des ihr zugeordneten Auswahlfelds durch eine Eingabe, beispielsweise über die Bedieneinheit 8, ausgewählt werden kann. Hieran kann sich die Auswahl einer der übergeordneten Kategorie nachgeordnete Kategorien anschließen. Dieser sind entweder weitere, ihr nachgeordnete Kategorien oder unmittelbar Fahrziele zugeordnet. Die Auswahl wird über die Bestimmung von Kategorien fortgeführt, bis von einem Benutzer eine insbesondere nachgeordnete Kategorie ausgewählt wird, der wiederum nur Fahrziele zugeordnet sind. Diese Fahrzeile wird dem Benutzer anschließend zur Auswahl angezeigt. Die Auswahl der Fahrziele kann beispielsweise aus einer alphabetisch oder nach einer Entfernung zur aktuellen Fahrzeugposition geordneten Liste erfolgen.

Ausgehend von einem Initialisierungsschritt 20, beispielsweise einem Einschalten einer Navigationsvorrichtung 1 in einem Fahrzeug, wird das erfindungsgemäße Verfahren eingeleitet. In einem ersten Eingabeschritt 21 wählt ein Benutzer das Eingabeverfahren aus. In einem anschließenden ersten Prüfschritt 22 wird geprüft, ob ein Benutzer ein Fahrziel über eine Kategorieauswahl eingeben will. Ist dies nicht der Fall, da beispielsweise der Fahrer eine Eingabe über eine Zielkarten-Positionierung, einer Adresseingabe oder über eine Auswahl aus der Liste der letzten Ziele wählen will, so wird zu dem Eingabeschritt 23 verzweigt, in dem alternative, hier nicht erläuterte Verfahren zur Eingabe eines Fahrziels durchgeführt werden. Für den Fall, dass ein Benutzer eines Auswahl eines Fahrziels über eine Auswahl von Fahrzielkategorien wünscht, so wird zu dem Ermittlungsschritt 24 weiter verzweigt, in dem von der Recheneinheit 3 zunächst die oberste Ebene der auswählbaren Kategorien bestimmt wird.

Um eine entsprechende Kategorieauswahl durchführen zu können, umfasst die digitale Karte 7 Fahrziele, die jeweils mit Kategorieinformationen verbunden sind. Die Kategorien können sich hierbei in übergeordnete Kategorien, wie beispielsweise "Freizeit" und nachgeordnete Kategorien zu dem Thema der übergeordneten Kategorie untergliedern. Nachgeordnet Kategorien zu der Kategorie "Freizeit" können beispielsweise die Kategorien "Restaurants" oder "Sportanlagen" sein. Die über- und nachgeordneten Kategorien können hierbei gemäß einer Baumstruktur hierarchisch geordnet sein. Dabei ist es auch möglich, einzelne Fahrziele mehreren Kategorien zuzuordnen. Dem Fahrziel können dann auch mehrere Einträge in der hierarchischen Baumstruktur zugeordnet sein. In einer weiteren Ausführungsform ist es auch möglich, dass die Ziele in der Navigationsdatenbank der Karte 7 jeweils nur einer nachgeordneten Kategorien jeweils unmittelbar zugeordnet sind.

In einer bevorzugten Ausführungsform weisen übergeordnete Kategorien keine direkte Zuordnung zu Fahrzielen auf. Nur die letzten Elemente in dem Kategoriebaum weisen jeweils eine Zuordnung zu Fahrzielen auf. Für die Erstellung eines einem Benutzer auszugebenden Auswahlmenüs ist eine weitere Datenbank abgelegt, in der die Zusammensetzung der nachgeordneten Kategorien gespeichert ist, die jeweils einem übergeordneten Element nachgeordnet sind. Hierbei kann die Zusammensetzung für jede Kategorie, die ein oder mehrere nachgeordnete Kategorien aufweist, gespeichert sein, so dass sich aus der Datenbank für die Kategoriegruppen die hierarchische Ordnung der übergeordnete und der nachgeordneten Kategorien ergibt. In einer Ausführungsform ist hierfür eine Listenstruktur vorgesehen, bei der ein Kopfelement der Liste die Bezeichnung der übergeordneten Kategorie enthält, und wobei sich die nachgeordneten Kategorien anschließen, die der übergeordneten Kategorie jeweils nachgeordnet sind. Hierbei könne auch mehrere Hierarchieebenen abgebildet werden. Eine Datei kann dabei für jede Kategorie mit nachgeordneten Kategorien vorgesehen sein. Eine Speicherung kann beispielsweise gemäß der im Folgenden dargestellten Tabelle durchgeführt werden. Die hier gezeigten Kategorien sind dabei beispielhaft dargestellt. Es können je nach Ausführungsform auch zusätzliche oder andere Kategorien abgelegt werden.

| POI | Freizeit | Verkehr | Alle POIs | |
|---|---|---|---|---|
| Alle POIs | Flughafen | Restaurant | Bahnhof | Parken |
| | Tennisplatz | Fußball | Werkstatt | Tankstelle |
| | | Stadion | | |
| Freizeit | Restaurant | Sportanlage | Alle Freizeit | |
| Alle Freizeit | Restaurant | Fußball | Tennisplatz | |
| | | Stadion | | |
| Verkehr | Flughafen | Bahnhof | Parken | Tankstelle |
| | Werkstatt | Alle | | |
| | | Verkehr | | |
| Alle Verkehr | Flughafen | Bahnhof | Parken | Tankstelle |
| | Werkstatt | | | |
| Sportanlage | Fußball | Tennisplatz | Alle | |
| | Stadion | | Sportanlagen | |
| Alle | Fußball | Tennisplatz | | |
| Sportanlagen | Stadion | | | |

In der ersten Spalte sind jeweils die Kopfelemente angegeben. In den nachfolgenden Spalten sind diejenigen Kategorien angegeben, die der in dem Kopfelement angegebenen Kategorie unmittelbar nachgeordnet sind. Im Folgenden werden einige der in der Tabelle gezeigten Zuordnungen beispielhaft erläutert. Die höchste Hierarchieebene ist durch die Liste "POI" angegeben. Hierunter befinden sich die nachgeordneten Kategorien "Freizeit" und "Verkehr". Ferner wird als zusätzliche Auswahl die Auswahl "alle POIs" angeboten (POI = Point of interest).

Bei der Auswahl der Kategorie "Alle..." werden alle nachgeordneten Kategorien der untersten Hierarchieebene angeboten zu der auf "Alle..." folgenden Kategorie angeboten, denen unmittelbar Fahrziele zugeordnet sind. Wird eine dieser Kategorien ausgewählt, so werden in einem folgenden Schritt Fahrziele dargestellt, beispielsweise ein oder mehrere Flughäfen, ein oder mehrere Restaurants, ein oder mehrere Bahnhöhe usw.. Die mit "Alle ..." beginnenden Zeilen müssen nicht explizit abgespeichert werden, sondern können auch aus den nicht markierten Zeilen generiert werden, sondern können bei Bedarf rechnerisch generiert werden. In vorliegenden Beispiel werden bei der Auswahl der Kategorien "alle POIs" die nachgeordneten Kategorien zur Menge aller POIs angeboten, nämlich "Flughafen", "Restaurant", "Bahnhof", "Parken", "Tennisplatz", "Fußball Stadion", "Werkstatt", "Tankstelle".

Bei der Auswahl der Kategorie "Freizeit" werden die nachgeordnete Kategorien "Restaurant", alle Freizeit" und "Sportanlage" angeboten. Wird nun wiederum "alle Freizeit " ausgewählt, so werden in gleicher Weise wie bei der Kategorie "Alle POIs" die Kategorien "Restaurant", "Fußball Stadion", "Tennisplatz" angeboten.

In einer alternativen Ausführungsform kann direkt nach der Auswahl der Kategorie "Alle POIs" eine Liste mit allen Fahrzielen der nachgeordneten Kategorien "Flughafen", "Restaurant", "Bahnhof", "Parken", "Tennisplatz", "Fußball Stadion", "Werkstatt", "Tankstelle" angezeigt werden und nach der Auswahl der Kategorie .,alle Freizeit" analog dazu eine Liste mit allen Fahrzielen der nachgeordneten Kategorien "Restaurant", "Fußball Stadion", "Tennisplatz". In einer weiteren Ausführungsform ist es auch möglich auf die mit "Alle..." eingeleiteten Auswahllisten zu verzichten und nur eine hierarchische Auswahl zuzulassen.

Hat nun ein Benutzer die Eingabe eines Fahrziels über die Eingabe von Kategorien ausgewählt, so wird von dem Elmittlungsschritt 24 zu einem Darstellungsauswahlschritt 25 verzweigt, der in der Figur 3 im Detail dargestellt ist.

In dem vorliegenden Ausführungsbeispiel soll eine Kategorie einem Fahrer nur dann angeboten werden, wenn zu dieser Kategorie oder zu wenigstens einer gegebenenfalls vorhandenen, nachgeordnete Kategorie wenigstens ein auswählbares Fahrziel existiert. So ist es möglich, dass in einem Datensatz der digitalen Karte 7 zwar eine Kategorie vorgesehen ist, für diese Kategorie jedoch in dem Gebiet der digitalen Karte kein Fahrziel existiert. Bevorzugt kann das entsprechende Gebiet jedoch auch durch einen Benutzerwunsch eingeengt werden. So kann ein Benutzer z. B. bei dem Eingabeschritt 21 eine von ihm gewünschte Stadt oder ein anderes, von ihm gewünschtes Gebiet, beispielsweise ein Bundesland oder ein Landkreis, eingeben. Alternativ kann ein solches Gebiet auch durch einen Kreis mit einem definierten Radius von z.B. 50 km um die aktuelle Fahrzeugposition beschrieben werden. Eine Anzeige einer Kategorie zur Auswahl, sow-ohl von nachgeordneten, als auch von übergeordneten Kategorien, erfolgt nur dann, wenn für diese Kategorie in dem entsprechenden, gewählten Gebiet auch ein Fahrziel existiert.

In einem zweiten Prüfschritt 30 wird überprüft, ob wenigstens ein Element der obersten Kategorieebene eine nachgeordnete Kategorie aufweist. Hierbei soll unter dem Aufweisen einer nachgeordneten Kategorie verstanden werden, dass wenigstens eine nachgeordnete Kategorie existiert, der entweder selber ein Fahrziel zugeordnet ist oder die wiederum in einer beliebigen Tiefe der Hierarchie wenigstens eine, ihr wiederum nachgeordnete Kategorie aufweist, der wenigstens ein Fahrziel zugeordnet ist. Weist keine Kategorie der obersten Kategorieebene eine solche nachgeordnete Kategorie auf so wird der Darstellungsauswahlschritt 25 beendet.

In vorliegenden Fall wird nun unmittelbar zu einem Anzeigeschritt 26 weiterverzweigt, der in der Figur 2 dargestellt ist. In diesem Fall wird in dem Anzeigeschritt 26 dem Nutzer die oberste Kategorieebene unmittelbar zur Auswahl dargestellt, sofern ihnen Fahrziele zugeordnet sind. In einem Auswahlschritt 27. der sich an den Anzeigeschritt 26 anschließt, trifft der Betrachter nun eine Auswahl aus den ihm zur Auswahl angebotenen Kategorien. In einem anschließenden dritten Prüfschritt 28 wird überprüft, ob ein Benutzer eine Kategorie ausgewählt hat, die selber wieder wenigstens eine nachgeordnete Kategorie aufweist. In diesem Fall wird zu dem Darstellungsauswahlschritt 25 zurückverzweigt und das anhand der Figur 3 beschriebene Verfahren wird für den nun verbleibenden Kategorie-Teilbaum nochmals durchgeführt. Wird dagegen in dem dritten Prüfschritt 28 festgestellt, dass die ausgewählte Kategorie keine nachgeordneten Kategorien, sondern lediglich zugeordnete Fahrziele aufweiset, so wird zu einem Eingabeschritt 29 verzweigt, in dem ein Benutzer aus einer Liste dargestellter Fahrziele, die beispielsweise durch eine Namensbezeichnung angegeben sind, auswählen kann. So können beispielsweise die Namen von verschiedenen Bahnhöfen oder von verschiedenen Restaurants angegeben werden. Ferner können auch zusätzliche Informationen, wie beispielsweise eine Adresse, in der Auswahl dargestellt werden. Wird ein dargestelltes Fahrziel durch den Fahrer ausgewählt, so wird gegebenenfalls nach einer weiteren Bestätigung von der Recheneinheit 3 eine Fahrtroute zu dem ausgewählten Fahrziel bestimmt.

Wird in dem zweiten Prüfschritt 30 gemäß der Figur 3 dagegen festgestellt, dass wenigstens eine der Kategorien der obersten Hierarchieebene einer nachgeordneten Kategorie zugeordnet ist, so wird zu einem vierten Prüfschritt 31 verzweigt. In dem vierten Prüfschritt 31 wird die Anzahl der nachgeordneten Kategorien für die erste der übergeordneten Kategorien ermittelt. Bei der bereits oben erläuterten Kategorie "Verkehr" wären dies beispielsweise die fünf Kategorien "Flughafen", "Bahnhof", "Parken", "Tankstelle", "Werkstatt". Die mit "Alle..." beginnenden Auswahlmöglichkeiten werden bevorzugt nicht mitgezählt. So wird im vorliegende Beispiel die Auswahl "Alle Verkehr", in der wiederum eine Listenauswahl der nachgeordneten Kategorien oder Fahrziele gegeben werden, nicht mitgerechnet. In einer ersten Ausführungsform werden dabei für eine Zählung die auf dem Datenträger jeweils in der Datenstruktur vorhandenen, nachgeordnete Kategorien bei der Zählung berücksichtigt. In einer bevorzugten Ausführungsform wird eine nachgeordnete. Kategorie dann und nur dann bei der Ermittlung der Anzahl berücksichtigt, wenn dieser Kategorie oder wenigsten einer ihr nachgeordneten Kategorie wenigstens ein Fahrziel zugeordnet ist. Dies ist dann der Fall, wenn in der gesamten digitalen Karte oder für den Fall, dass zuvor ein bestimmtes Gebiet für die Auswahl festgelegt wurde, in der digitalen Karte bzw. in dem festgelegten Gebiet ein dieser Kategorie zugehöriges Fahrziel existiert.

Die ermittelte Anzahl wird in dem vierten Prüfschritt 31 mit einem Schwellwert verglichen. Anstelle eine Berechnung durchzuführen, kann die Anzahl der nachgeordneten Kategorien aber auch bereits vorher bestimmt und gespeichert sein, beispielsweise für einen bestimmten Ort, für einen Datenträger mit einer digitalen Karte oder für ein anderweitig festgelegtes Gebiet.

Ist die ermittelte Anzahl der nachgeordneten Kategorien größer als der Schwellwert, so wird in einem anschließenden, ersten Festsetzungsschritt 32 festgesetzt, dass dem Benutzer die übergeordnete Kategorie, also beispielsweise die Kategorie "Verkehr", zur Auswahl angeboten wird. Anschließend wird zu einem fünften Prüfschritt 33 verzweigt, wobei überprüft wird, ob noch eine weitere Kategorie der obersten Hierarchiestufe eine nachgeordnete Kategorie aufweist. Ist dies nicht der Fall, so wird der Darstellungsauswahlschritt 25 beendet und es wird zu dem Anzeigeschritt 26 weiterverzweigt.

Wird in dem fünften Prüfschritt 33 dagegen festgestellt, dass noch nicht alle übergeordneten Kategoriegruppen geprüft wurden, so wird zu dem vierten Prüfschritt 31 zur Prüfung der nächsten übergeordneten Kategoriegruppe zurückverzweigt.

Wird in dem vierten Prüfschritt 31 festgestellt, dass die ermittelte Anzahl kleiner als der vorgegebene Schwellwert ist, so wird zu einem zweiten Festsetzungsschritt 35 weiterverzweigt. In dem zweiten Festsetzungsschritt 35 wird für eine nachfolgende Anzeige die übergeordnete Kategorie durch die ihr nachgeordneten Kategorien ersetzt. In dem später nachfolgenden Anzeigeschritt 26 werden dann statt der übergeordneten Kategorie die ihr nachgeordneten Kategorien angezeigt. Anschließend wird zu dem fünften Prüfschritt 33 weiterverzweigt.

In einer großen Stadt ist damit zu rechnen, dass zu jede der Kategorien "Flughafen", "Bahnhof", "Parken", "Tankstelle", "Werkstatt" wenigsten ein Fahrziel existiert. Ist beispielsweise der Schwellwert drei, so würde in einem solchen Fall weiterhin die übergeordnete Kategorie "Verkehr" einem Benutzer in einer ersten Auswahl dargestellt, da fünf Kategorien, denen jeweils wenigstens ein Fahrziel zugeordnet ist, der Kategorie "Verkehr" nachgeordnet sind.

Ein kleinerer Ort, weist möglicherweise beispielsweise keinen Flughafen, keinen Bahnhof und keine Werkstatt auf, wohl aber drei Parkplätze und zwei Tankstellen. Ist der auch hier der Schwellwert auf drei festgesetzt, so ergibt die Ermittlung der Kategorien, zu denen Fahrziele existieren, den Wert zwei, nämlich "Parken" und "Tankstelle". Somit werden nun in dem Anzeigeschritt dem Benutzer statt der übergeordneten Kategorie "Verkehr" unmittelbar die nachgeordneten Kategorien "Parken" und "Tankstelle" ausgegeben. So könnte beispielsweise die Menüdarstellung lauten, die in dem Darstellungsauswahlschritt 25 festgelegt wird: ..Freizeit" (hier beispielsweise keine Ersetzung), "Parken", "Tankstelle" (ersetzen beide die Kategorie "Verkehr"),"alle POIs" (ungeändert).

In einer ersten Ausführungsform kann jeweils eine Ersetzung nur durch Kategorien der nächsten Hierarchieebene erfolgen, im vorliegenden Ausführungsbeispiel also beispielsweise "Parken" und "Tankstelle" anstelle der übergeordneten Kategorie "Verkehr". Ferner ist es jedoch auch möglich, dass die hierarchische Struktur über mehrere Ebenen fortgesetzt wird. So ist beispielsweise der übergeordneten Kategorie "Freizeit" die Kategorie "Sportanlage" nachgeordnet, während wiederum die Kategorien "Fußballstadion" und "Tennisplatz" der Kategorie "Sportanlage" nachgeordnet sind. Gibt es beispielsweise in einem Ort keine anderen Freizeitmöglichkeiten als nur einen Tennisplatz. so könnte die Kategorie "Tennisplatz" nicht nur die Kategorie "Sportanlage", sondern auch die übergeordnete Kategorie "Freizeit" ersetzen. Denn der Kategorie "Freizeit" ist dann nur eine Kategorien, nämlich die Kategorie "Sportanlage" nachgeordnete. Der Kategorie "Sportanlage" ist jedoch nur die Kategorie "Tennisplatz" nachgeordnet.

Zur Realisierung einer Ausführungsform, bei der entsprechend auch mehr als eine Hierarchieebene nachgeordnete Kategorien eine ihr übergeordnete Kategorie ersetzen, wird der Darstellungsauswahlschritt 25. in der Figur 3 als 25' bezeichnet, rekursiv vor dem zweiten Festsetzungsschritt 35 eingefügt. Dies ist in der Figur 3 gestrichelt dargestellt. Somit werden nun auch die Kategorien der nachgeordneten Hierarchieebene jeweils daraufhin geprüft, ob eine Ersetzung erfolgen soll. Auch in diesem Fall erfolgt eine Ersetzung dann, wenn die Anzahl der nachgeordneten Kategorien den Schwellwert nicht überschreitet. So wird bei einem Schwellwert von drei bei dem oben genannten Beispiel des Tennisplatzes als einzige Freizeitmöglichkeit, nach der Entscheidung, "Freizeit" durch "sportanlagen" zu ersetzen, der Darstellungsauswahlschritt 25 auch auf die übergeordnete Kategorie "Sportanlagen" angewandt. Diese hat aber nur eine Kategorie, nämlich "Tennisplatz, der ein Fahrziel zugeordnet ist. Damit ist die Anzahl kleiner als der Schwellwert von drei, so dass auch diese Ersetzung durchgeführt wird. Somit wird die Ersetzung der Kategorie "Sportanlagen" durch die Kategorie "Tennisplatz" durchgeführt. In der Anzeige für die Kategorieauswahl wird also bei dem vorliegenden Ausführungsbeispiel die Kategorien "Freizeit" durch die Kategorie "Tennisplatz" ersetzt.

Insbesondere bei dieser Ausführungsform kann es dazu kommen, dass infolge mehrerer Ersetzungen über mehrere Hierarchieebenen hinweg die Anzahl der auswählbaren Kategorien ansteigt, die dargestellt werden. In einer weiteren Ausführungsform ist daher gepunktet dargestellt ein weiterer, sechster Prüfschritt 36 dem zweiten Festsetzungsschritt 35 vorgeschaltet. Hierbei wird die Gesamtzahl der anzuzeigenden Kategorien unter Berücksichtigung der noch folgenden nicht ersetzten Kategorien und der gegebenenfalls bereits vorgenommenen Ersetzungen sowie der durch den zweiten Festsetzungsschritt 35 gegebenenfalls vorzunehmenden Ersetzungen bestimmt. Wird hierbei ein vorgegebener, zweiter Schwellwert überschritten, so wird der zweite Festsetzungsschtitt 35 übersprungen und es wird keine weitere Ersetzung vorgenommen. Wird der zweite Schwellwert nicht überschritten, so wird der zweite Festsetzungsschritt 35 durchgeführt. Der zweite Schwellwert kann beispielsweise so gewählt werden, dass er die maximale Anzahl der zeitgleich auf einer Bildschirmseite der Anzeige 5 darstellbaren Auswahlfenster zur Kategorieauswahl darstellt, beispielsweise acht Auswahlfelder.

Der erste und/oder der zweite Schwellwert können einerseits in der nicht flüchtigen Speichereinheit 4 der Navigationsvorrichtung 1 abgelegt sein. Ferner können einer oder beide Schwellwerte aber auch über die Bedieneinheit 8 durch den Benutzer verändert werden.

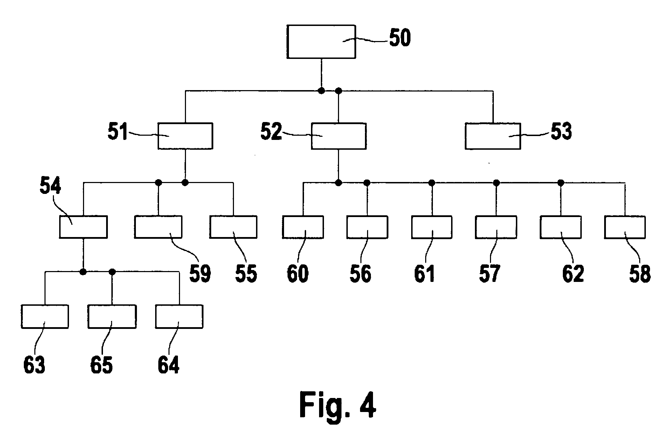

In der Figur 4 ist die Darstellung der einzelnen Kategorien nochmals in einem Kategoriebaum gezeigt. Hierbei bezeichnen die folgenden Beschriftungen die jeweiligen Kategorieeinträge: POI 50, Freizeit 51, Verkehr 52, alle POIs 53, Sportanlage 54, alle Freizeit 55, Tankstelle 56, Bahnhof 57, alle Verkehr 58, Restaurant 59, Parken 60. Werkstatt 61. Flughafen 62, Fußballstadion 63. alle Sportanlagen 64, Tennisplatz 65.

Will ein Benutzer nun z. B. einen Tennisplatz anfahren, und befindet er sich in einer Großstadt, so ist davon auszugehen, dass alle Kategorie der untersten Ebene wenigstens ein Fahrziel zugeordnet ist. Wählt ein Benutzer nun die Auswahl POI an, so wird ihm bei einem Schwellwert von zwei zunächst die Liste angezeigt: Freizeit 51, Verkehr 52, alle POIs 53. Wählt er nun Freizeit 51 an, so wird ihm angezeigt: Sportanlage 54. Restaurant 59. alle Freizeit 55. Wählt er nun aus dieser Liste die Kategorie Sportanlage 54 aus, so wird im folgende Liste angezeigt: Fußballstadion 63. Tennisplatz 65, alle Sportanlagen 64. Wählt er nun Tennisplatz 65 aus, so wird ihm im Folgenden eine Liste aller Tennisplätze in der Stadt angezeigt, von denen er einen zur Auswahl als Fahrziel auswählen kann. Erfolgt die Eingabe in einer Kleinstadt, in der es nur einen Tennisplatz und keine weiteren points of interest gibt, so wird direkt in der obersten Ebene die Auswahl Tennisplatz 65 angezeigt. Er kann nun die Kategorie Tennisplatz 65 auswählen und dann dementsprechend ein oder mehrere Tennisplätze auswählen.

Bei einem Schwellwert von drei würde sich in der Großstadt in erfindungsgemäßer Weise die Eingabe wie folgt ändern. Zunächst würde dem Benutzer die Auswahl Freizeit 51, Verkehr 52, alle POIs 53 wie zuvor angezeigt. Wählt er nun Freizeit 51 aus, so wird die Auswahl Sportanlagen 54 durch die Auswahl Fußballstadion 63 und Tennisplatz 65 ersetzt. Denn zu Sportanlagen 54 gibt es nur zwei Unterkategorien. Dem Benutzer wird somit die Liste Fußballstadion 63, Tennisplatz 65, Restaurant 59, alle Freizeit 55 angezeigt. Der Nutzer kann nun die Kategorie Tennisplatz 65 unmittelbar auswählen.

Wird als erster Schwellwert vier vorgegeben, so wird bereits in der obersten Ebene Fußballstadion 63, Tennisplatz 65, Restaurant 59. Verkehr 52, alle POIs 53 angezeigt. Denn in diesem Fall wird auch die Kategorieauswahl Freizeit 51 durch ihre nachgeordneten Kategoriegruppen ersetzt. Würde beispielsweise ein erster Schwellwert von sechs ausgewählt, so würde einem Benutzer die Auswahl Fußballstadion 63, Tennisplatz 65. Restaurant 59, Parken 60, Tankstelle 56. Werkstatt 61, Bahnhof 57, Flughafen 62. alle POIs 53 angezeigt. In diesem Fall werden alle übergeordneten Kategoriegruppen ersetzt, da keine Kategoriegruppe mehr als sechs untergeordnete Kategorien aufweist.

## Patentansprüche

1. Verfahren zur Eingabe eines Fahrziels, wobei zunächst eine Kategorieauswahl getroffen wird, wobei anschließend Fahrziele entsprechend der Kategorieauswahl zur Auswahl angeboten werden, wobei wenigstens ein Teil der Fahrziele jeweils wenigstens einer nachgeordneten Kategorie zugeordnet sind, die jeweils einer ihr übergeordneten Kategorie zugeordnet ist, **dadurch gekennzeichnet, dass** eine Kategorieauswahl derart erfolgt, dass für die Kategorieauswahl jeweils eine übergeordnete Kategorie dargestellt wird oder jeweils die übergeordnete Kategorie durch eine oder die mehrere ihr nachgeordneten Kategorien ersetzt wird, und dass eine Ersetzung jeweils dann erfolgt, wenn die Anzahl der nachgeordneten Kategorien zu einer übergeordneten Kategorie jeweils kleiner als ein vorgegebener erster Schwellwert ist.

2. Verfahren nach Anspruch 1, **dadurch gekennzeichnet, dass** zuvor ein Ort oder ein Gebiet ausgewählt wird und dass die Anzahl der nachgeordneten Kategorien für eine übergeordnete Kategorie für den jeweiligen Ort oder das jeweilige Gebiet bestimmt wird.

3. Verfahren nach einem der vorhergehenden Ansprüche, **dadurch gekennzeichnet, dass** eine nachgeordnete Kategorie bei der Bestimmung der Anzahl der nachgeordneten Kategorien nur für den Fall berücksichtigt wird, dass der Kategorie oder wenigstens einer ihr nachgeordneten Kategorie wenigstens ein Fahrziel zugeordnet ist.

4. Verfahren nach einem der vorhergehenden Ansprüche, **dadurch gekennzeichnet, dass** zusätzlich zu einer übergeordneten Kategorie eine Gesamtliste aller zu der der übergeordneten Kategorie untergeordneten Kategorien, denen jeweils ein mindestens ein Fahrziel zugeordnet ist, zur Auswahl angeboten wird.

5. Verfahren nach einem der vorhergehenden Ansprüche, **dadurch gekennzeichnet, dass** zusätzlich zu einer übergeordneten Kategoriegruppe eine Gesamtliste aller Fahrziele, die zu einer der übergeordneten Kategoriegruppen untergeordneten Kategorien gehören, zur Auswahl angeboten wird.

6. Verfahren nach einem der vorhergehenden Ansprüche, **dadurch gekennzeichnet, dass** für die Gesamtheit der zur Auswahl anzuzeigenden Kategorien ein zweiter Schwellwert festgelegt wird und dass ein Ersetzen von übergeordneten Kategorien durch ihnen nachgeordnete Kategorien beendet wird, wenn durch eine weitere Ersetzung der vorgegebene Schwellwert überschritten würde.

7. Verfahren nach einem der vorhergehenden Ansprüche, **dadurch gekennzeichnet, dass** der erste und/oder der zweite Schwellwert durch einen Benutzer verändert wird.

## Claims

1. Method for inputting a travel destination, wherein initially a category selection is made, wherein travel destinations corresponding to the category selection are subsequently offered for selection, wherein at least some of the travel destinations are respectively assigned to at least one subordinate category, which is respectively assigned to a category which is superordinate thereto, **characterized in that** a category selection is made in such a way that, for the category selection, in each case a superordinate category is displayed or in each case the superordinate category is replaced by one category, or the plurality of categories, which is/are subordinate thereto, and **in that** replacement occurs whenever the number of subordinate categories with respect to a superordinate category is respectively smaller than a predefined first threshold value.

2. Method according to Claim 1, **characterized in that** a location or a region is selected beforehand, and **in that** the number of subordinate categories for a superordinate category is determined for the respective location or the respective region.

3. Method according to one of the preceding claims, **characterized in that** a subordinate category is taken into account in the determination of the number of subordinate categories only for the case in which the category or at least a category subordinate thereto is assigned at least one travel destination.

4. Method according to one of the preceding claims, **characterized in that**, in addition to a superordinate category, an overall list of all the categories which are subordinate to the superordinate category and which are respectively assigned at least one travel destination is offered for selection.

5. Method according to one of the preceding claims, **characterized in that**, in addition to a superordinate category group, an overall list of all the travel destinations which are associated with categories which are subordinate to one of the superordinate category groups is offered for selection.

6. Method according to one of the preceding claims, **characterized in that**, a second threshold value is defined for the entirety of the categories to be displayed for selection, and **in that** replacement of superordinate categories is ended by categories which are subordinate thereto if the predefined threshold value has been exceeded by a further replacement.

7. Method according to one of the preceding claims, **characterized in that** the first and/or second threshold value are/is changed by a user.

## Revendications

1. Procédé pour entrer une destination, dans lequel on fait d'abord un choix de catégorie, on propose ensuite au choix des destinations en fonction du choix de catégorie, au moins une partie des destinations étant attribuée respectivement à au moins une catégorie subordonnée, laquelle est attribuée respectivement à une catégorie supérieure, **caractérisé en ce qu'**un choix de catégorie s'effectue de telle sorte qu'à chaque fois une catégorie supérieure est représentée pour le choix de catégorie ou à chaque fois la catégorie supérieure est remplacée par une catégorie ou plusieurs catégories qui lui sont subordonnées, et **en ce qu'**un remplacement intervient à chaque fois que le nombre des catégories subordonnées par rapport à une catégorie supérieure est respectivement inférieur à une première valeur seuil prédéfinie.

2. Procédé selon la revendication 1, **caractérisé en ce qu'**une localité ou une zone est choisie à l'avance et **en ce que** le nombre des catégories subordonnées est déterminé pour une catégorie supérieure pour la localité respective ou la zone respective.

3. Procédé selon l'une quelconque des revendications précédentes, **caractérisé en ce qu'**une catégorie subordonnée est prise en compte pour la détermination du nombre des catégories subordonnées uniquement dans le cas où au moins une destination est attribuée à la catégorie ou au moins à une catégorie qui lui est subordonnée.

4. Procédé selon l'une quelconque des revendications précédentes, **caractérisé en ce que**, en supplément d'une catégorie supérieure, on propose au choix une liste globale de toutes les catégories subordonnées à la catégorie supérieure, à chacune desquelles est attribuée au moins une destination.

5. Procédé selon l'une quelconque des revendications précédentes, **caractérisé en ce que**, en supplément d'un groupe de catégories supérieur, on propose au choix une liste globale de toutes les destinations qui appartiennent à l'une des catégories subordonnées à des groupes de catégories supérieurs.

6. Procédé selon l'une quelconque des revendications précédentes, **caractérisé en ce qu'**une seconde valeur seuil est définie pour l'ensemble des catégories à afficher au choix et **en ce qu'**un remplacement de catégories supérieures par des catégories qui leur sont subordonnées est achevé lorsque la valeur seuil prédéfinie a été dépassée par un nouveau remplacement.

7. Procédé selon l'une quelconque des revendications précédentes, **caractérisé en ce que** la première et/ou la seconde valeur seuil sont modifiées par un utilisateur.
